# EUROPEAN PATENT SPECIFICATION

(11) **EP 4 491 432 B1**
(45) Date of publication and mention of the grant of the patent: **18.11.2026**
(21) Application number: 24382412.5
(22) Date of filing: 18.04.2024
(51) Int. Cl.: B60K 35/23, B60K 35/28

(54) **COMPUTER-IMPLEMENTED METHOD AND COMPUTER PROGRAM FOR GENERATING AN IMMERSIVE EXPERIENCE GRAPHIC DISPLAY ENVIRONMENT FOR DRIVING A REAL VEHICLE IN A VIRTUAL ENVIRONMENT, A SYSTEM FOR GENERATING THIS VIRTUAL GRAPHIC DISPLAY ENVIRONMENT AND A VEHICLE WITH AN IMMERSIVE 5 EXPERIENCE DRIVING SYSTEM INCORPORATING THE SAME**
COMPUTERIMPLEMENTIERTES VERFAHREN UND COMPUTERPROGRAMM ZUR ERZEUGUNG EINER IMMERSIVEN ERFAHRUNGSANZEIGE
SYSTÈME DE GÉNÉRATION DE CET ENVIRONNEMENT D'AFFICHAGE GRAPHIQUE VIRTUEL ET VÉHICULE AVEC UN SYSTÈME DE COMMANDE IMMERSIF

(30) Priority: 21.04.2023 ES 202330319
(43) Date of publication of application: 15.01.2025
(73) Proprietor: Seat, S.A., 08760 Martorell (ES)
(72) Inventor: VALENCIA SANCHEZ, Ivan, MARTORELL, Barcelona (ES)
(74) Representative: Pons IP

(56) References cited:
- DE-A1- 102020 203 428
- DE-A1- 102021 122 050
- DE-U1- 202019 102 868
- US-A1- 2020 307 616
- US-A1- 2022 289 252
- BLISSING BJÖRN ET AL: "A Technical Platform using Augmented Reality for Active Safety Testing", ROAD SAFETY & SIMULATION INTERNATIONAL CONFERENCE PROCEEDINGS, 1 January 2015 (2015-01-01), pages 1 - 11, XP093162912, ISBN: 978-1-4951-7445-2

## Description

The present invention relates to methods of generating a graphic display environment corresponding to a virtual environment, which is used as a support and visual reference for driving a real vehicle through a certain real environment, where the user only has as a visual reference the graphic environment displayed on a virtual reality vision device.

### Background of the invention

The present invention relates to methods of generating a graphic display environment corresponding to a virtual environment, which is used as a support and visual reference for driving a real vehicle through a certain real environment, where the user only has as a visual reference the graphic environment displayed on a virtual reality vision device.

These computer-implemented methods, which generate a virtual environment displayed to a user on the virtual reality vision device for real vehicle driving following the visual reference of this virtual environment, comprise corresponding steps of detecting over time the positioning, orientation, and displacement of the real vehicle in the real environment and the position and orientation of the virtual reality vision device with respect to the real environment and/or with respect to the real vehicle used by the user driver or co-driver of the vehicle. To this position and orientation information must be added the configuration data and graphic data of the trafficable areas and obstacles that are available on the route through which the real vehicle can travel in the real environment so that through a computational unit, a virtual environment adapted to the reality of the real environment is created to be sent and displayed to the user driving the vehicle through the virtual reality vision device.

These methods comprise image generation steps to create a graphical display environment corresponding to a virtual environment. Said virtual environment can be adapted to the real environment shown to the user, using the positioning information mentioned above and including graphic elements and animations to allow a real vehicle to drive within the defined trafficable area, according to the driving support indications algorithm.

These images generated by the known methods provide safety indications, above all, and most importantly, aimed at determining which circulation areas are permitted and which areas of the environment cannot be crossed in order to avoid collisions with obstacles or with the limits of trafficable areas. In this regard, reference is made to DE 10 2020 203 428 A, "A TECHNICAL PLATFORM USING AUGMENTED REALITY FOR ACTIVE SAFETY TESTING" by B. Blissing and F. Bruzelius (2015), and DE 20 2019 102 868 U.

All these known methods generate images in the form of solid virtual barriers to delimit these limits of circulation or prohibitions of passage so that the user driving the vehicle is aware of these limits and considers them non-passable due to their solid appearance. This causes at all times a limitation of the visualization of the virtual graphic display environment for the user, who performs the driving with the only visual reference of the virtual reality display device.

On the other hand, in the case that the user drives the vehicle to these prohibited or non-trafficable areas, the virtual reality display device may not have images adapted or adapted to the real environment of this position of the vehicle outside the trafficable areas, so that the user, if he/she does not have very basic information of the transit of the vehicle through this area, usually has to take off the virtual reality display device in order see the real environment. In such a situation where the user no longer uses the virtual reality display device, it is difficult for the user to return to the trafficable areas and, therefore, suitable for driving the real vehicle in the virtual environment.

Therefore, it is necessary to offer an alternative to the state of the art that covers the problems found in it by configuring a method of generating a virtual environment for driving real vehicles through this virtual graphic display environment.

### Description of the invention

The present invention object is providing a method for generating a graphic display environment for driving real vehicles with a virtual reality vision device, a system for generating this virtual graphic display environment, as well as a vehicle including at least one such system, which manages to solve the aforementioned drawbacks, presenting other advantages that will be described below.

In accordance with this object, according to a first aspect, the present invention is directed to a method as defined in claim 1.

This configuration provides a method that generates a graphical display environment with greater security and functionality than those known in the state of the art. Thus, the present invention uses a mixed reality, which activates or deactivates the arrangement of virtual images or the arrangement of images acquired from the real environment based on the determination of an unsafe driving situation. The advantageous step for of changing the configuration of the display environment provides greater safety to the user of the vehicle driven under an immersive experience in a virtual environment, since, in the event of reaching an unsafe driving situation in which the suitability of the graphical display environment may be compromised, either by the existence of obstacles near the real vehicle, or by reaching the real limits that define the end of predetermined areas as trafficable, incomplete virtual images that do not help to overcome possible obstacles, or due to a doubt/deficient information of the correct correspondence or accuracy of the displayed virtual images and/or the position and orientation of the vehicle in time, it is advantageous to visualize in real-time in the graphic visualization environment displayed through the virtual reality vision device the real images taken directly by the image acquisition means.

This allows safe driving to continue through the vision of the real environment without having to dispense with the virtual reality vision device until the vehicle returns to trafficable areas and until it is certain that the correspondence between the virtual images arranged in the virtual reality vision device is correct with respect to the position and orientation of the vehicle in time.

The capture of images of the real environment from image acquisition means comprised in the virtual reality vision device, forming part of the same, or by an element coupled without movement relative to said virtual reality vision device, makes it possible to ensure that the images of the real environment made available to the user are those corresponding to said real environment at the time, position and orientation in which the user is with the vehicle, without depending on transmissions through image generation and/or processing units external to the device and, therefore, without depending on the state of its connection.

By way of clarification, the immersive experience for driving a real vehicle should be understood as the sensory reference that the user, who is going to drive the real vehicle, has in order to drive a real vehicle in a fully virtual environment. Thus, the user's immersive experience is based on having as the only visual references of the vehicle's environment and trafficable areas, the graphical display environment shown on the virtual reality vision device, making this safety setting even more critical in the unsafe driving situation mode.

The graphic display environment, also by way of clarification, is formed at least by the virtual images of the virtual environment of the vehicle, by virtual images corresponding to guidance signals, barriers, or other virtual elements or information to support driving, as well as by any real image that is decided to incorporate to execute the unsafe driving situation mode.

It should also be understood as real images, any image based on such real image acquisition performed by the described image acquisition means and to which some virtualization filter or virtual image addition of driving support can be applied.

The virtual environment generated can be reliable and therefore respect the real environment in which the vehicle is driving. Thus, for example, if the real vehicle drives on a real circuit, the virtual environment can respect the layout of the real circuit, but introducing a virtualization of it, for example, to simulate that it is snowy, with fire areas, etc. Alternatively, the virtual environment generated may be totally different from the real environment in which the vehicle is driving. Thus, by way of example, the real environment through which the real vehicle circulates can be an area without obstacles, but with perimeter limits that cannot be crossed by the real vehicle, the virtual environment simulating a fully virtual route through which the driver must circulate. Alternatively, the actual environment through which the actual vehicle drives may be an area with physical obstacles in addition to such perimeter boundaries mentioned above. Therefore, for the aforementioned safety reasons described above, it is particularly important for the driver to correctly identify in the virtual environment the obstacles and/or boundaries that delimit the trafficable areas.

According to a preferred embodiment of the invention, the activation of the configuration change of the graphical display environment to an unsafe driving situation mode of the real vehicle in the virtual environment is determined at least by the detection that the real vehicle has crossed virtual boundaries defining the end of some virtually predetermined areas as trafficable.

These virtual boundaries are preset at virtually determined positions according to the traffic requirements of the real vehicle that you want to be met, e.g. areas with real obstacles, virtually non-trafficable areas, non-trafficable areas in the real environment, etc. Such virtual boundaries may be arranged in the virtual environment at a predetermined distance from the corresponding location of the same boundaries in the real environment, to enable a safety area before an actual impact occurs between the real vehicle and such real obstacles or boundaries.

Also preferably, with respect to the step for changing the configuration of the graphical display environment corresponding to an unsafe driving situation mode of the real vehicle in the virtual environment, once its activation is determined because the real vehicle has crossed the virtual boundaries defining the end of the virtually predetermined areas as trafficable, the method also includes a step corresponding to generating graphical guidance elements in the form of directional guidance signals and a step of compositing said acquired real environment images for real-time arrangement in the virtual reality vision device by superimposing said graphical guidance elements on said acquired real environment images, wherein said graphical guidance elements are configured and arranged to signal and guide to the location of the virtually predetermined trafficable areas in the virtual environment so that the user can drive back to the same.

This allows a graphical visualization environment that, once passed to the visualization of images of the real environment, can be complemented with this type of signaling and guidance indications to facilitate the user to drive back to the areas virtually predetermined as trafficable. These directional guidance signals, preferably, are superimposed on such images of the real environment acquired in a static position in front of the vehicle.

In another preferred embodiment of the invention, alternatively or in addition to the above determination of the configuration change of the display environment to the unsafe driving situation mode, this activation of the configuration change of the graphical display environment to an unsafe driving situation mode of the real vehicle in the virtual environment is determined at least by the detection that the virtual reality vision device has lost connection with a control unit obtaining at least the data associated with position and velocity of the real vehicle, with the computational unit and/or with any system external to this vision device that is responsible for providing basic data such as virtual images and/or data on the position and orientation of the real vehicle and the virtual reality vision device or a loss of communication between these devices themselves critical for safe driving in this immersive experience is detected.

Similarly, this determination of the activation of the unsafe driving situation mode allows for improved driving safety under this immersive experience when, due to communication failure with the virtual reality vision device or between critical devices for the arrangement on the vision device of correct images according to the position and orientation of the actual vehicle in time, it cannot be ensured that the user is viewing a correct virtual graphic display environment according to its position and orientation. This situation can also occur due to the malfunction of one of the components that make up the system or due to the low precision in taking measurements of any of them, which can lead to not being able to ensure that the user is viewing a virtual graphic display environment that is correct according to its position and orientation.

According to a possible embodiment of the invention, the method also comprises a step of limiting the dynamic behavior of the real vehicle while the method executes the step of arranging the acquired images of the real environment for real-time display on the virtual reality vision device as a graphical display environment upon activation of the change of the configuration of the graphical display environment to a mode of unsafe driving situation of the real vehicle in the virtual environment.

This configuration of the vehicle's dynamic behavior, understood as the limitation of the vehicle's driving performance configuration, such as, for example, and in particular, the limitation of the maximum speed and maximum acceleration, provides greater safety to the unsafe driving situation detected and activated, making it necessary to maintain more cautious driving conditions. This limitation of the vehicle's dynamic behavior ends when the step for changing the configuration of the graphical display environment to a mode of determining an unsafe driving situation is no longer executed, i.e., the vehicle has returned to the circuit and/or the virtual images are displayed correctly again.

Optionally but preferably, within the graphical display environment configuration change step, the change to a non-safe driving situation mode of the real vehicle in the virtual environment is disabled when this graphical display environment configuration change step is not within the activation parameters, wherein this step comprises at least the following sub-steps:
- terminating the real-time disposition of the images acquired from the real environment by means of the image acquisition means, and
- arranging the virtual images back into the virtual reality viewing device for display on the virtual reality viewing device as a graphical display environment.

This step, added in the step related to switching to an unsafe driving situation mode of the real vehicle in the virtual environment, performs deactivation and redisplays the virtual images on the virtual reality vision device for the immersive driving experience. Likewise, the method comprises a further step of de-constraining the previously constrained real vehicle dynamic behavior when the virtual images are again arranged in the virtual reality vision device for display in the virtual reality vision device as a graphical display environment.

According to another optional embodiment of the invention, the activation/deactivation of changing the configuration of the graphical display environment to an unsafe driving situation mode of the real vehicle in the virtual environment is performed at a step of the method of analyzing at least the position of the real vehicle with respect to the virtual boundaries of the areas predetermined virtually as trafficable and/or of the status of the communications between the virtual reality vision device.

This step, which may be implicit on the one hand in the image composition and layout step or in any associated with the control unit that performs data collection of the position and orientation of the vehicle, when reporting a position outside the area delimited as passable or a communication failure, is established as a step of position and status control of communications between devices continuously, directly activating or deactivating the change to the unsafe driving situation mode.

According to the invention, the method also comprises a step corresponding to generating some graphical safety elements in the form of virtual barriers virtually located at virtual boundaries defining the end of some areas virtually predetermined as trafficable, wherein the step of composing and arranging the virtual images for display on the virtual reality vision device as a graphical display environment includes combining the images relating to said virtual environment with the graphical safety elements in the form of virtual barriers.

In line with the invention, these virtual barriers are only displayed in the graphical display environment when the distance from the actual vehicle to the virtual point at which said virtual barriers are located is less than a first predetermined and configurable distance.

This configuration allows for greater visibility of the virtual environment, avoiding the visualization of spaces that would be too closed by these barriers if they were permanently in place, which makes the immersive experience more pleasant and cleaner.

Also in a preferential way with respect to this embodiment of an arrangement of images of virtual barriers, during the stretch that the real vehicle travels determined from the virtual point corresponding to the first distance to the virtual barriers, the visual configuration with which these graphic elements show as virtual barriers is that of a virtual barrier initially transparent or translucent for, as the real vehicle approaches the virtual point where these virtual barriers are located as the limit of the trafficable area, the intensity of the visualization or opacity of the graphic element increases until it becomes totally opaque at a second distance from the virtual point where these virtual barriers are located, this second distance also being predetermined and configurable and smaller than the first with respect to the virtual barrier.

With this configuration, the greater visualization of the virtual environment during driving is even more durable in time by having the visual intensity of the barriers in the process of increasing and allowing to see through them when the distance and time to them is still considered high.

Optionally, the visual intensity with which the virtual barriers are displayed increases inversely proportional to the remaining distance of the vehicle from the virtual point corresponding to the first distance to the virtual barriers until it becomes totally opaque at a second distance from the virtual point where the virtual barriers are located.

Also preferably, the virtual point corresponding to the first distance to the virtual barriers, as well as the virtual point corresponding to the second distance to the virtual barriers, are predetermined virtual points taking into account the speed of the vehicle, giving a reaction margin to the user driving the vehicle of a first predefined period of time to reach the virtual barriers at the virtual point corresponding to the first distance and of a second predefined period to reach the virtual barriers at the virtual point corresponding to the second distance.

According to a possible embodiment of the invention, the virtual reality vision device receives the images from a central computer or computational unit external to said vision device, said device having its processing unit to be able to perform the composition of images that create the graphic display environment.

In accordance with the stated objectives, according to a second aspect, the present invention is also based on a system for generating a virtual graphic display environment in a virtual reality vision device for an immersive experience of driving real vehicles as defined in claim 11, which system is configured to perform the method steps of any of the embodiments of the first aspect of the invention. The system thus comprises at least one virtual reality vision device, a control unit that at least collects positioning and orientation data of a vehicle, as well as a computational unit that generates the images of the virtual environment and sends them to the virtual reality vision device, wherein said virtual reality vision device has image acquisition means comprised in said virtual reality vision device, forming part thereof, or by a coupled element without movement relative thereto, to be able to display images of the virtual environment provided by the computational unit and/or the images of the real environment taken by said image acquisition means, based on the state of activation or deactivation of the unsafe driving situation mode based on predetermined parameters.

Preferably, the virtual reality viewing device is a virtual reality goggles. Alternatively, any display system can be considered to provide an immersive driving experience with a unique display of the graphical display environment shown exclusively on it.

This system for the generation of an immersive driving experience of a real vehicle in a virtual environment comprises, in addition to the execution of the general functions of the system, at least the following elements and devices:
- a first positioning unit configured to detect the positions adopted by said real vehicle while driving in a real environment;
- virtual reality vision device configured to display the graphical display environment;
- a second positioning unit configured to detect at least the relative position of said virtual reality vision device with respect to the actual vehicle; and
- at least one computational entity operatively connected operatively with said first and second positioning units and said virtual reality vision device, and configured to generate said virtual graphic display environment and send to said virtual reality vision device signals representative thereof to be displayed through said virtual reality vision device.

Advantageously, this system includes:
- in the virtual reality vision device, or in an element coupled without movement relative to the virtual reality vision device, comprises image acquisition means configured and arranged to acquire images of the actual vehicle or of the interior of a passenger compartment thereof, according to the same field of view as that of the user of the virtual reality vision device;
- the at least one computational entity is operatively connected also with said image acquisition means for receiving the images acquired by said image acquisition means, or signals representative thereof, and configured to:
- or generating virtual images of the virtual environment by a computational unit and sending these virtual images to the virtual reality vision device so that the user perceives a fully virtual environment,
- or sending the acquired images of the real environment to the virtual reality vision device for real-time display on the virtual reality vision device as a graphical display environment, so that the user perceives the real environment through the virtual reality vision device,
- or:
   - generating mixed images that combine those related to said virtual environment, representing elements external to the real vehicle, with said acquired images (as they are acquired) or with images representative of the same (for example, images obtained after applying some treatment or filter to the acquired images, to give the sensation of virtualization), representing elements of the real vehicle or of the interior of the vehicle's cabin, and
   - sending signals representing such mixed images to the virtual reality vision device to be displayed on the virtual reality display. This composition and generation of the real images is preferably performed on the virtual reality vision device itself so that it can display them in case of an unsafe driving situation due to system disconnection.

Also in accordance with the indicated objectives, according to a third aspect, the present invention is also based on a vehicle with a system for generating a virtual graphic display environment in a virtual reality vision device for an immersive vehicle driving experience, wherein the vehicle comprises at least one system for generating a virtual graphic display environment as indicated in the previous embodiment of the system itself and according to the second aspect of the invention, which executes the method corresponding to the embodiments of the first aspect of the invention.

Furthermore, according to a fourth aspect, the present invention also relates to a computer program comprising code instructions which, when executed on at least one processor, implement the steps of the method as described in the first aspect.

With this, the invention makes it possible to have a vehicle having the advantages indicated for the system of generating a virtual graphic display environment indicated above.

### Brief description of the figures

To better understand what has been disclosed above, some drawings are included in which a practical case of embodiment is represented schematically and only as a nonlimiting example.
Figure 1 is a plan view of a virtual road map generated based on an area where driving with a real vehicle in immersive experience mode with a virtual graphic display environment is possible.
Figure 2 is an image corresponding to the graphic display environment in the unsafe driving situation mode due to leaving the trafficable area.
Figure 3 is an image corresponding to the graphical display environment in the virtual image display mode with virtual barriers arranged at a high display intensity that is practically opaque.
Figure 4 is an image of the actual vehicle driven under this immersive experience.

### Description of a preferred embodiment

In the following, various embodiments of the invention are described, in a nonlimiting manner thereof, for a better understanding of the indicated features.

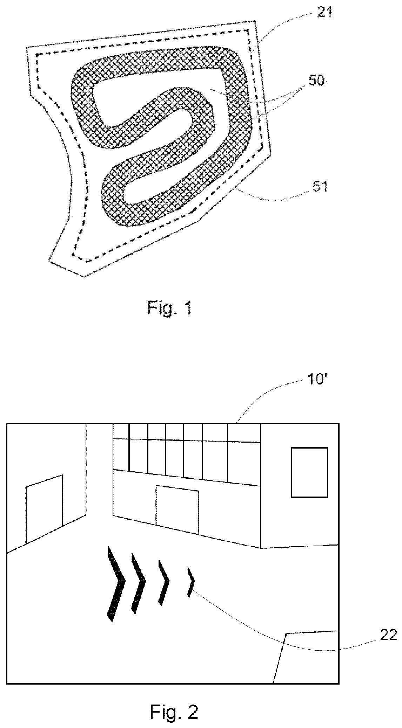

According to a preferred embodiment of the invention, and as can be seen in Figures 1 to 4, a method for generating a graphical display environment (10, 10') is provided as the basis for an immersive experience of driving a real vehicle (100) in a virtual environment displayed on a virtual reality display device (11), which in the present embodiment will be virtual reality glasses.

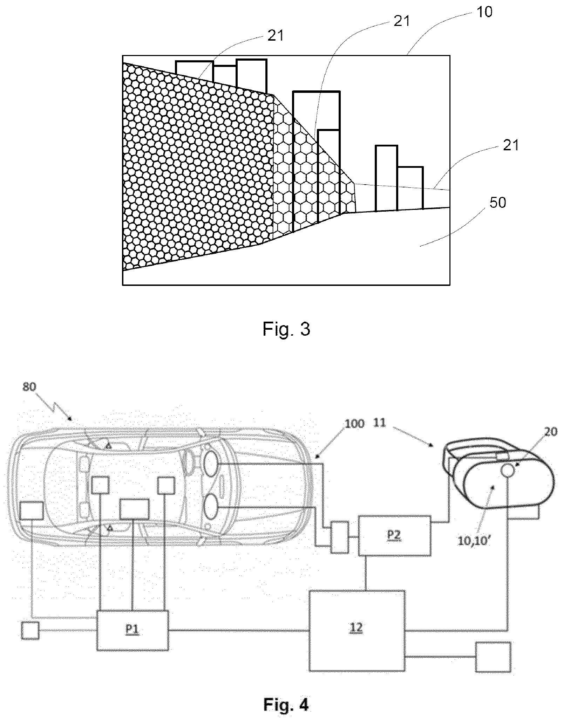

In its conventional operation the virtual reality display device (11) shows as a graphic display environment (10) a composition of the virtual images that have been generated in the computational unit (12), which correspond to a virtual graphic representation according to the position and orientation of the real vehicle (100) in the real environment, as well as the representation of possible virtual graphic information to support driving in the immersive experience, such as virtual barriers (21), represented in Figure 3, or virtual guidance signals (22), represented in Figure 2.

As a general explanation of the operation of driving through immersive experience in a virtual environment, it should be taken into account that the real vehicle (100) drives through a real environment with physical obstacles with which it can collide, such as the houses represented in Figure 2. Since this is an immersive virtual reality experience, the driver of the real vehicle (100) can see through the graphical representation means of the virtual reality display device (11) a graphical display environment (10) totally different from that of the real environment. As an example, as schematically represented in Figure 3, the driver would see virtual images generated by the computational unit (12) where only some buildings are represented in the distance, these real buildings having disappeared from the real environment. In order to avoid collisions with such real obstacles, a change in the graphical display environment (10) shown to the user through the virtual reality display device (11) is implemented, changing from a layout of virtual images to a layout of real images, making use of mixed reality systems.

According to the present embodiment, the real vehicle (100) drives in a real environment consisting of an obstacle-free area, but with perimeter boundaries that cannot be crossed by said real vehicle (100). Said perimeter boundaries or physical obstacles (51) are represented in Figure 1 as a perimeter frame. Based on said real environment, a virtual environment has been constructed, which is based on a circuit layout, represented with shading or without shading around said shaded area in said figure 1. It should be noted that the real environment does not have such a layout, but is a trafficable area (50) generated entirely based on virtual images. Thus, the driving of the vehicle (100) under this immersive experience has to have a virtual delimitation of said trafficable areas (50) to prevent the vehicle (100) from leaving these trafficable areas (50) to avoid physical obstacles (51), forbidden areas in the real environment or restricted areas in the virtual environment.

This visual configuration of the virtual graphical display environment (10) may be modified by the detection of an exit of the vehicle (100) from the trafficable area (50). At that moment, in which there may be an imminent obstacle, an area with no associated virtual graphical representation or any condition that, due to the position of the actual vehicle (100) outside the trafficable areas, may compromise the suitability of the images arranged in the graphical display environment and thus the driving safety in this immersive experience, the step of the graphical display environment generation method corresponding to an unsafe driving situation mode is activated.

This unsafe driving situation mode involves capturing images of the real environment taken utilizing image acquisition means (20) comprised in said virtual reality vision device (11), by way of example according to the embodiment disclosed forming part of the virtual reality glasses. These image acquisitions (20) involve taking images of the real environment according to the same field of view as that visible to the user through the virtual reality vision device (11). In this way, the user who had a graphical display environment with security problems stops receiving virtual images of the unreliable virtual environment and can visualize in real-time the real environment through the images captured by the image acquisition means (20) without having to do without said virtual reality vision device (11).

Within this configuration of the graphical display environment (10') in unsafe driving situation mode caused by the real vehicle (100) leaving the virtual boundaries marked as trafficable areas (50), as represented in Figure 2, there is a step for generating some virtual graphical guidance elements in the form of directional guidance signals (22). Images of the real environment acquired for real-time disposition (considering real-time the transmission of images that may have a corresponding minimum delay in obtaining and sending them for disposition in the virtual reality vision device (11)) are displayed in the virtual reality vision device (11) overlaying said guiding signals (22) to signal and guide the user to the location of the virtually predetermined areas as trafficable (50) in the virtual environment. This arrangement of the guidance signals (22) is realized in the present embodiment in such a way that they are superimposed on the images of the real environment in a static position in front of the vehicle (100). Accordingly, the method includes a prior step of comparing the position of the actual vehicle (100) in the actual environment with a nearby location of a virtually predetermined area as passable (50) and determining a guidance direction, thereby generating at least one guidance signal (22) based on said determined guidance direction. Said calculation is iterative to generate updated guidance signals (22) according to each position of the actual vehicle (100) in the real environment.

This visual configuration of the graphic display environment (10') with display of images based on the real environment, corresponding to the unsafe driving situation mode, can also be activated at the moment of detection that the virtual reality vision device (11) has lost the connection with the control unit (P1,P2) that obtains the data associated with the position and speed of the vehicle, or with the computational unit that generates and sends the virtual images to the virtual reality vision device (11) and/or with any system external to this vision device (11) that is in charge of providing basic data such as virtual images and/or data of the position and orientation of the vehicle (100) or a loss of communication critical for safe driving in this immersive experience is detected between these devices themselves.

In this case of activation of the unsafe driving situation mode, the images captured from the real environment are arranged in the virtual reality vision device (11) without passing through external computing units, with which communication may have been lost, using the direct connection of these the image acquisition means (20) with the vision device (11) itself, as well as using the processing means of the vision device (11) itself in order to make these images of the real environment available in the graphic display environment (10').

Any detection of these situations, the departure of the vehicle (100) from the virtual limits of the trafficable areas (50) or the loss of critical communication for the generation of reliable images of the virtual environment, leads in the present preferred embodiment to a limitation of the dynamic behavior of the vehicle (100), in the present embodiment of maximum speed and maximum acceleration. In alternative embodiments in accordance with the remainder of the embodiments, these limitations are not present or are of a different type, with the objective of providing greater driving safety in these circumstances. Thus, when faced with an unsafe driving situation due to having exceeded the virtual limits of the trafficable areas (50), the method of the present invention acts on the braking system of the actual vehicle (100) to limit the driving speed to a maximum actual speed. In addition, the propulsion system is limited so that the maximum allowable acceleration is less than or equal to a predetermined maximum value. Thus, while the vehicle is circulating in the area between the virtual barriers (21) and the physical obstacles (51), such limitation of the vehicle dynamic behavior (100) is implemented.

In those situations in which it is detected that the conditions of activation of the configuration corresponding to the unsafe driving situation no longer exist, i.e., the vehicle is again in the passable area (50) and/or the communication between the different devices of the system (80) of generation of the graphic display environment is again correct, it involves altering again the configuration of the graphic display environment (10') represented through the virtual reality display device (11). Thus, the real-time arrangement of the acquired images of the real environment in the virtual reality vision device (11) is interrupted to re-display a graphical display environment (10) with virtual images of the virtual environment for the immersive experience.

In the present embodiment, the analysis of the activation/deactivation of the configuration of the graphic display environment (10,10') is given by the detection on the one hand in the image composition and arrangement step or in any associated with the control unit (P1,P2) performing the data acquisition of the actual vehicle (100) position and orientation, upon reporting a position outside a passable area or a communication failure.

Alternatively, and compatible with the rest of the above embodiments, this analysis is established as a step of continuous position and status control of the communications between devices, directly activating or deactivating the change to the unsafe driving situation mode.

With respect to the determination of the virtual boundaries, as can be seen in Figure 3, in the present embodiment, graphical safety elements are generated in the form of virtual barriers (21) virtually located at the points defining the end of the areas virtually determined as trafficable (50). These images of virtual barriers (21) are included in the graphic display environment (10) displayed on the virtual reality vision device (11) so that they are only displayed when the distance of the real vehicle (100) to the virtual point at which said virtual barriers (21) are located is less than a first distance, which according to a preferred example of embodiment, is determined such that according to the speed of the real vehicle (100) it takes between 3 and 10 seconds of circulation for the real vehicle (100) to cross the boundary of the trafficable area (50). It is, therefore, a first distance that varies according to the actual vehicle speed (100). This predetermined distance associated with the vehicle speed (100) can be configurable and adaptable.

In the present embodiment, during the route section that the real vehicle (100) travels from the virtual point corresponding to the first distance to the virtual barriers (21), the visual configuration of these graphic elements as virtual barriers (21) is that of an initially transparent or translucent virtual barrier which, as the real vehicle (100) approaches the virtual point where said virtual barriers are located as the limit of the trafficable area (50), increases the intensity of the visualization or opacity of the virtual barrier (21) until it becomes totally opaque at a second distance from the virtual point where said virtual barriers (21) are located, this second distance also being predetermined in relation to the speed of the vehicle (100) and configurable and smaller than the first distance with respect to the virtual barrier (21), and in the present embodiment is determined such that according to the speed of the real vehicle (100) it takes between 0.5 and 2 seconds of circulation at its speed for the real vehicle (100) to pass the limit of the trafficable area (50).

The present embodiment is configured such that the visual intensity with which they display the virtual barriers (21) increases inversely proportional to the remaining distance of the actual vehicle (100) from the virtual point corresponding to the first distance to the virtual barriers (21) until it becomes fully opaque at a second distance from the virtual point where said virtual barriers (21) are located. Thus, as shown in Figure 3, the virtual barrier (21) depicted comprises different segments or areas with different degrees of opacity. Thus, a first segment closer to the actual vehicle (100) is represented with greater opacity, as shown in Figure 3 schematically with a higher density lattice. On the other hand, a second segment further away from the real vehicle (100) is represented with less opacity, being represented schematically in Figure 3 with a lower density lattice.

Alternatively these virtual barriers (21) may be permanently arranged at all times of the graphical representation of the virtual environment or appear permanently in one of the above situations, or even have a configuration of light intensity not proportional to the proximity, or a configuration of the points of appearance of the virtual barriers (21) with respect to the distances, speeds and times for crossing the boundaries of trafficable areas (50) where the virtual barriers (21) are arranged.

Figure 4 shows the system proposed by the second aspect of the present invention, as an example of embodiment, for which an actual vehicle (100) is an automobile. However, in alternative embodiments not illustrated, it may be analogously a motorcycle or a truck, for example. The system (80) generates a graphical display environment (10,10') in a virtual reality vision device (11) for an immersive vehicle driving experience, performing the method described in the first aspect of the invention, wherein specific manner, the system (80) comprises:
- at least one virtual reality viewing device (11) in the form of virtual reality glasses,
- a control unit (P1,P2) that at least collects positioning and orientation data from the vehicle (100), and
- a computational unit (12) that generates the images of the virtual environment and sends them to the virtual reality vision device (11), which is operatively connected to the first (P1) and second (P2) positioning units associated with the control unit, and to the virtual reality vision device (11).

This virtual reality vision device (11) has image acquisition means (20), in this case cameras arranged in physical connection with said virtual reality vision device (11) to be able to display images of the virtual environment provided by the computational unit and/or the images captured by the cameras directly connected to said virtual reality vision device (11).

In addition to these specific features, the system for its general operation as a generator of the graphical display environment base of the immersive experience, also comprises:
- a first positioning unit (P1), configured to detect the positions adopted by the real vehicle (100) while driving in a real environment, and thus monitor its evolution;
- a second positioning unit (P2), configured to detect at least the relative position of the virtual reality vision device (11) with respect to the actual vehicle (100);

Based on the information determined by said first (P1) and second (P2) positioning units, the at least one computational unit (12) is configured to, when it detects that the real vehicle (100) is moving, use signals received from the second positioning unit (P2) for detection of the relative position and movement of the virtual reality glasses with respect to the real vehicle (100), and signals received from the first positioning unit (P1) about the positions adopted by the real vehicle (100) while driving in the real environment, to isolate the movements/accelerations of the virtual reality glasses within the real vehicle (100) from the movements/accelerations of the real vehicle (100), to generate the virtual environment consistent with the movements of the real vehicle (100) and the virtual reality glasses.

In general, the computational unit (12) has memorized the different virtual circuits or scenarios, such as the one shown in Figure 1, and generates and renders the virtual environment through which the vehicle drives based on the position of the real vehicle (100) and the position of the virtual reality vision device (11) inside the real vehicle (100).

Although in Figure 4, the virtual reality vision device (11) has been schematically illustrated outside the real vehicle (100), in use mode these are carried by an occupant of the real vehicle (100).

Although reference has been made to a specific embodiment of the invention, it is obvious to a person skilled in the art that the method described for generating a graphic display environment for driving real vehicles with a virtual reality vision device, as well as the system for generating this virtual graphic display environment and the vehicle including at least one such system, are susceptible to numerous variations and modifications, and that all the details mentioned can be substituted by other technically equivalent ones. The scope of protection is defined by the claims.

## Claims

1. A computer-implemented method for generating a graphical display environment in a virtual reality vision device, wherein the graphical display environment (10, 10') corresponds to a virtual environment and is used as an immersive experience for driving a real vehicle (100) based on said graphical display environment (10, 10') of this immersive experience, beimgsaid graphical display environment (10, 10') being used as a support and visual reference for driving the real vehicle in a real environment, the method comprising:
- a step for producing virtual images of the virtual environment by a computational unit (12), and
- a step for composing and arranging these virtual images for display on the virtual reality vision device (11) as a graphical display environment (10,10'), in correspondence with at least one position and orientation over time of the actual vehicle (100),
**characterized in that** the method further comprises:
- a step for capturing images of the real environment taken by means of image acquisition means (20) comprised in said virtual reality vision device (11), forming part thereof, or by a coupled element without movement relative thereto, said image acquisition means (20) being configured to acquire images of the real environment according to the same field of view as that visible through said virtual reality vision device (11),
- a step for changing the configuration of the graphical display environment (10,10') corresponding to an unsafe driving situation mode of the actual vehicle (100) in the virtual environment, this unsafe driving situation mode is activated and deactivated by predetermined parameters, wherein this step of changing the configuration of the graphical display environment (10,10') comprises at least the following sub-steps:
- terminating the arrangement of the virtual images in the virtual reality vision device (11), and
- arranging the acquired images of the real environment for real-time display on the virtual reality vision device (11) as a graphical display environment (10'); the method **characterized in that** it further comprises a step of generating graphical safety elements in the form of virtual barriers (21) virtually located at virtual boundaries defining the end of virtually predetermined areas as trafficable (50), wherein the step of composing and arranging the virtual images for display on the virtual reality vision device (11) as a graphical display environment (10) includes combining the images relating to said virtual environment with the graphical safety elements in the form of virtual barriers (21), and wherein said virtual barriers (21) are only displayed in the graphical display environment (10) when the distance of the actual vehicle (100) to the virtual point at which said virtual barriers (21) are located is less than a first predetermined and configurable distance.

2. A computer-implemented method, according to claim 1, wherein the activation of changing the configuration of the graphical display environment (10,10') to an unsafe driving situation mode of the real vehicle (100) in the virtual environment is determined at least by detecting that the real vehicle (100) has crossed virtual boundaries defining the end of virtually predetermined areas as trafficable (50).

3. A computer-implemented method, according to claim 2, wherein once it has been determined that the actual vehicle (100) has crossed the virtual boundaries defining the end of the virtually predetermined areas as trafficable (50) and therefore, the change of configuration of the graphical display environment (10,10') to an unsafe driving situation mode has been triggered, the method also includes a step corresponding to generating graphical guidance elements in the form of directional graphical guidance elements (22) and a step of composing said acquired real environment images for real-time arrangement in the virtual reality vision device (11), said graphical guidance elements (22) being superimposed on said acquired real environment images, wherein said graphical guidance elements (22) are configured and arranged to signal and guide to the location of the virtually predetermined areas as trafficable (50) in the virtual environment so that the user can drive back to the same.

4. A computer-implemented method, according to claim 3, wherein the directional graphical guidance elements (22) are superimposed on said images of the real environment acquired in a static position in front of the vehicle represented in the virtual reality vision device (11).

5. A computer-implemented method according to any one of claims 1 or 2, wherein the activation of the change of the configuration of the graphical display environment (10,10') to an unsafe driving situation mode of the real vehicle (100) in the virtual environment is determined at least by the detection that the virtual reality vision device (11) has lost connection with a control unit (P1,P2) that obtains at least the data associated with position and speed of the real vehicle, with the computational unit (12) and/or with any system external to this vision device that is in charge of providing basic data such as virtual images and/or data of the position and orientation of the real vehicle (100) and of the virtual reality vision device (11) or a loss of communication between these devices themselves critical for safe driving in this immersive experience is detected.

6. A computer-implemented method according to any one of the preceding claims, wherein the method further comprises a step of limiting the dynamic behavior of the real vehicle (100) while the method executes the step of arranging the acquired images of the real environment for real-time display on the virtual reality vision device (11) as a graphical display environment (10') upon activation of changing the configuration of the graphical display environment to an unsafe driving situation mode of the real vehicle (100) in the virtual environment.

7. A computer-implemented method according to any one of the preceding claims, wherein within the graphical display environment setting change step (10,10'), switching to an unsafe driving situation mode of the real vehicle (100) in the virtual environment is disabled when this graphical display environment setting change step (10,10') is not within the activation parameters, wherein this step comprises at least the following sub-steps:
- terminating the real-time arrangement of the images acquired from the real environment by the image acquisition means (20), and
- arranging the virtual images back into the virtual reality vision device (11) for display in the virtual reality vision device (11) as a graphical display environment (10).

8. A computer-implemented method according to claim 1, wherein during the section traversed by the real vehicle (100) determined from the virtual point corresponding to the first distance to the virtual barriers (21), the visual configuration in which these graphic elements are displayed as virtual barriers (21) is that of a virtual barrier (21) initially transparent or translucent for, as the real vehicle (100) approaches the virtual point where said virtual barriers are located as the limit of the trafficable area (50), the intensity of the visualization or opacity of the graphic element increases until it becomes totally opaque at a second distance from the virtual point where said virtual barriers (21) are located, this second distance also being predetermined and configurable and smaller than the first one with respect to the virtual barrier (21).

9. A computer-implemented method according to claim 8, wherein the visual intensity with which the virtual barriers (21) display increases inversely proportional to the remaining distance of the vehicle from the virtual point corresponding to the first distance to the virtual barriers (21) until becoming totally opaque at a second distance from the virtual point where said virtual barriers (21) are located.

10. A computer-implemented method according to any one of the preceding claims, wherein the virtual reality vision device (11) receives images from a central computer or computational unit (12) external to said virtual reality vision device (11), said virtual reality vision device (11) having its own processing unit to be able to perform the composition of images creating the graphical display environment (10,10').

11. A system for generating a graphical display environment in a virtual reality vision device for immersive experience of driving a real vehicle (100) based on said graphical display environment (10, 10') of this immersive experience, said graphical display environment (10, 10') being used as a support and visual reference for driving the real vehicle in a real environment, **characterized in that** the system (80) is configured to perform the method steps of claims 1 to 10, wherein the system (80) comprises at least one virtual reality vision device (11), a control unit (P1,P2) that at least collects positioning and orientation data of a vehicle, as well as a computational unit (12) that generates the images of the virtual environment and sends them to the virtual reality vision device (11), wherein said virtual reality vision device (11) is provided with image acquisition means (20) comprised in said virtual reality vision device (11), forming part thereof, or by a coupled element without movement relative thereto, in order to display images of the virtual environment provided by the computational unit (12) and/or the images of the real environment taken by said image acquisition means (20), based on the state of activation or deactivation of the unsafe driving situation mode based on predetermined parameters.

12. A vehicle with an immersive experience driving system that generates a virtual graphic display environment, **characterized in that** the vehicle (100) comprises at least one system for generating a virtual graphic display environment (10,10') for driving as claimed in claim 11.

13. A computer program **characterized in that** it executes the method of any one of claims 1 to 10.

## Patentansprüche

1. Computerimplementiertes Verfahren zum Erzeugen einer grafischen Anzeigeumgebung in einer Sichtvorrichtung für virtuelle Realität, wobei die grafische Anzeigeumgebung (10, 10') einer virtuellen Umgebung entspricht und als ein immersives Erlebnis zum Fahren eines realen Fahrzeugs (100) basierend auf der grafischen Anzeigeumgebung (10, 10') dieses immersiven Erlebnisses verwendet wird, wobei die grafische Anzeigeumgebung (10, 10') als eine Unterstützung und visuelle Referenz zum Fahren des realen Fahrzeugs in einer realen Umgebung verwendet wird, das Verfahren umfassend:
- einen Schritt zum Produzieren virtueller Bilder der virtuellen Umgebung durch eine Recheneinheit (12), und
- einen Schritt zum Zusammensetzen und Anordnen dieser virtuellen Bilder für Anzeige auf der Sichtvorrichtung (11) für virtuelle Realität als eine grafische Anzeigeumgebung (10,10') in Entsprechung mindestens einer Position und Ausrichtung im Laufe der Zeit des tatsächlichen Fahrzeugs (100),
**dadurch gekennzeichnet, dass** das Verfahren ferner umfasst:
- einen Schritt zum Aufnehmen von Bildern der realen Umgebung, die mittels Bilderfassungsmitteln (20), die in der Sichtvorrichtung (11) für virtuelle Realität enthalten sind, Teil davon bilden oder durch ein gekoppeltes Element ohne Bewegung relativ dazu gemacht werden, wobei die Bilderfassungsmittel (20) konfiguriert sind, um Bilder der realen Umgebung gemäß demselben Sichtfeld, das durch die Sichtvorrichtung (11) für virtuelle Realität sichtbar ist, zu erfassen,
- einen Schritt zum Ändern der Konfiguration der grafischen Anzeigeumgebung (10,10'), entsprechend einem Modus einer unsicheren Fahrsituation des tatsächlichen Fahrzeugs (100) in der virtuellen Umgebung, wobei dieser Modus der unsicheren Fahrsituation durch zuvor bestimmte Parameter aktiviert und deaktiviert wird, wobei dieser Schritt zum Ändern der Konfiguration der grafischen Anzeigeumgebung (10,10') mindestens die folgenden Teilschritte umfasst:
- Beenden der Anordnung der virtuellen Bilder in der Sichtvorrichtung (11) für virtuelle Realität, und
- Anordnen der erfassten Bilder der realen Umgebung für Echtzeitanzeige auf der Sichtvorrichtung (11) für virtuelle Realität als eine grafische Anzeigeumgebung (10'); das Verfahren **dadurch gekennzeichnet, dass** es ferner einen Schritt zum Erzeugen grafischer Sicherheitselemente in der Form virtueller Barrieren (21) umfasst, die sich an virtuellen Grenzen, die das Ende von virtuell zuvor bestimmten Bereichen als befahrbar (50) definieren, virtuell befinden, wobei der Schritt zum Zusammensetzen und Anordnen der virtuellen Bilder für Anzeige auf der Sichtvorrichtung (11) für virtuelle Realität als eine grafische Anzeigeumgebung (10) ein Kombinieren der Bilder, die sich auf die virtuelle Umgebung beziehen, mit den grafischen Sicherheitselementen in der Form virtueller Barrieren (21) einschließt, und wobei die virtuellen Barrieren (21) in der grafischen Anzeigeumgebung (10) nur angezeigt werden, wenn der Abstand des tatsächlichen Fahrzeugs (100) zu dem virtuellen Punkt, an dem sich die virtuellen Barrieren (21) befinden, kleiner als ein erster zuvor bestimmter und konfigurierbarer Abstand ist.

2. Computerimplementiertes Verfahren nach Anspruch 1, wobei die Aktivierung zum Ändern der Konfiguration der grafischen Anzeigeumgebung (10,10') in einen Modus der unsicheren Fahrsituation des realen Fahrzeugs (100) in der virtuellen Umgebung mindestens durch Detektieren bestimmt wird, dass das reale Fahrzeug (100) virtuelle Grenzen, die das Ende von virtuell zuvor bestimmten Bereichen als befahrbar (50) definieren, überschritten hat.

3. Computerimplementiertes Verfahren nach Anspruch 2, wobei, sobald bestimmt worden ist, dass das tatsächliche Fahrzeug (100) die virtuellen Grenzen, die das Ende der virtuell zuvor bestimmten Bereiche als befahrbar (50) definieren, überschritten hat und daher die Konfigurationsänderung der grafischen Anzeigeumgebung (10,10') in einen Modus der unsicheren Fahrsituation ausgelöst worden ist, das Verfahren ebenso einen Schritt, der dem Erzeugen grafischer Führungselemente in der Form richtungsweisender grafischer Führungselemente (22) entspricht, und einen Schritt zum Zusammensetzen der erfassten Bilder realer Umgebung für Echtzeitanordnung in der Sichtvorrichtung (11) für virtuelle Realität einschließt, wobei die grafischen Führungselemente (22) auf die erfassten Bilder realer Umgebung überlagert werden, wobei die grafischen Führungselemente (22) konfiguriert und angeordnet sind, um zu der Stelle der virtuell zuvor bestimmten Bereiche als befahrbar (50) in der virtuellen Umgebung zu signalisieren und zu führen, sodass der Benutzer zu denselben zurückfahren kann.

4. Computerimplementiertes Verfahren nach Anspruch 3, wobei die richtungsweisenden grafischen Führungselemente (22) auf die Bilder der realen Umgebung überlagert werden, die in einer statischen Position vor dem Fahrzeug, das in der Sichtvorrichtung (11) für virtuelle Realität dargestellt ist, erfasst werden.

5. Computerimplementiertes Verfahren nach einem der Ansprüche 1 oder 2, wobei die Aktivierung der Änderung der Konfiguration der grafischen Anzeigeumgebung (10,10') in einen Modus der unsicheren Fahrsituation des realen Fahrzeugs (100) in der virtuellen Umgebung mindestens durch die Detektion bestimmt wird, dass die Sichtvorrichtung (11) für virtuelle Realität Verbindung mit einer Steuereinheit (P1,P2), die mindestens die Daten, die mit Position und Geschwindigkeit des realen Fahrzeugs verknüpft sind, erhält, mit der Recheneinheit (12) und/oder mit einem beliebigen System extern zu dieser Sichtvorrichtung, das zum Bereitstellen von Basisdaten wie virtuellen Bildern und/oder Daten der Position und Ausrichtung des realen Fahrzeugs (100) und der Sichtvorrichtung (11) für virtuelle Realität zuständig ist, verloren hat oder dass ein Kommunikationsverlust zwischen diesen Vorrichtungen selbst, der für sicheres Fahren in diesem immersiven Erlebnis entscheidend ist, detektiert wird.

6. Computerimplementiertes Verfahren nach einem der vorstehenden Ansprüche, wobei das Verfahren ferner einen Schritt zum Begrenzen des dynamischen Verhaltens des realen Fahrzeugs (100) umfasst, während das Verfahren den Schritt des Anordnens der erfassten Bilder der realen Umgebung für Echtzeitanzeige auf der Sichtvorrichtung (11) für virtuelle Realität als eine grafische Anzeigeumgebung (10') bei Aktivierung zum Ändern der Konfiguration der grafischen Anzeigeumgebung in einen Modus der unsicheren Fahrsituation des realen Fahrzeugs (100) in der virtuellen Umgebung ausführt.

7. Computerimplementiertes Verfahren nach einem der vorstehenden Ansprüche, wobei innerhalb des Schritts (10,10') für Änderung einer Einstellung der grafischen Anzeigeumgebung ein Umschalten in einen Modus der unsicheren Fahrsituation des realen Fahrzeugs (100) in der virtuellen Umgebung blockiert wird, wenn dieser Schritt (10,10') für Änderung der Einstellung der grafischen Anzeigeumgebung nicht innerhalb der Aktivierungsparameter liegt, wobei dieser Schritt mindestens die folgenden Teilschritte umfasst:
- Beenden der Echtzeitanordnung der Bilder, die durch die Bilderfassungsmittel (20) von der realen Umgebung erfasst werden, und
- Anordnen der virtuellen Bilder zurück in die Sichtvorrichtung (11) für virtuelle Realität für Anzeige in der Sichtvorrichtung (11) für virtuelle Realität als eine grafische Anzeigeumgebung (10).

8. Computerimplementiertes Verfahren nach Anspruch 1, wobei während des Abschnitts, der durch das reale Fahrzeug (100) durchquert wird, der ab dem virtuellen Punkt, der dem ersten Abstand zu den virtuellen Barrieren (21) entspricht, bestimmt wird, die visuelle Konfiguration, in der diese grafischen Elemente als virtuelle Barrieren (21) angezeigt werden, die ist, dass eine virtuelle Barriere (21) anfänglich transparent oder durchscheinend ist, sobald sich das reale Fahrzeug (100) dem virtuellen Punkt nähert, an dem sich die virtuellen Barrieren als die Begrenzung des befahrbaren Bereichs (50) befinden, die Intensität der Visualisierung oder Lichtundurchlässigkeit des grafischen Elements zunimmt, bis es in einem zweiten Abstand von dem virtuellen Punkt, an dem sich die virtuellen Barrieren (21) befinden, völlig undurchsichtig wird, wobei dieser zweite Abstand ebenso zuvor bestimmt und konfigurierbar und hinsichtlich der virtuellen Barriere (21) kleiner als der erste ist.

9. Computerimplementiertes Verfahren nach Anspruch 8, wobei die visuelle Intensität, mit der die virtuellen Barrieren (21) angezeigt werden, zu dem verbleibenden Abstand des Fahrzeugs von dem virtuellen Punkt, der dem ersten Abstand zu den virtuellen Barrieren (21) entspricht, umgekehrt proportional zunimmt, bis sie bei einem zweiten Abstand von dem virtuellen Punkt, an dem sich die virtuellen Barrieren (21) befinden, vollständig undurchsichtig werden.

10. Computerimplementiertes Verfahren nach einem der vorstehenden Ansprüche, wobei die Sichtvorrichtung (11) für virtuelle Realität Bilder von einem zentralen Computer oder einer Recheneinheit (12) extern zu der Sichtvorrichtung (11) für virtuelle Realität empfängt, wobei die Sichtvorrichtung (11) für virtuelle Realität ihre eigene Verarbeitungseinheit aufweist, um in der Lage zu sein, die Zusammensetzung von Bildern, die die grafische Anzeigeumgebung (10,10') schaffen, durchzuführen.

11. System zum Erzeugen einer grafischen Anzeigeumgebung in einer Sichtvorrichtung für virtuelle Realität für ein immersives Erlebnis zum Fahren eines realen Fahrzeugs (100) basierend auf der grafischen Anzeigeumgebung (10,10') dieses immersiven Erlebnisses, wobei die grafische Anzeigeumgebung (10, 10') als eine Unterstützung und visuelle Referenz zum Fahren des realen Fahrzeugs in einer realen Umgebung verwendet wird, **dadurch gekennzeichnet, dass** das System (80) konfiguriert ist, um die Verfahrensschritte nach den Ansprüchen 1 bis 10 durchzuführen, wobei das System (80) mindestens eine Sichtvorrichtung (11) für virtuelle Realität, eine Steuereinheit (P1,P2), die mindestens Positionierungs- und Ausrichtungsdaten eines Fahrzeugs sammelt, sowie eine Recheneinheit (12), die die Bilder der virtuellen Umgebung erzeugt und sie an die Sichtvorrichtung (11) für virtuelle Realität sendet, umfasst, wobei die Sichtvorrichtung (11) für virtuelle Realität mit Bilderfassungsmitteln (20), die in der Sichtvorrichtung (11) für virtuelle Realität enthalten sind, einen Teil davon bilden oder durch ein gekoppeltes Element ohne Bewegung relativ dazu, versehen ist, um Bilder der virtuellen Umgebung, die durch die Recheneinheit (12) bereitgestellt werden, und/oder die Bilder der realen Umgebung, die durch die Bilderfassungsmittel (20) gemacht werden, basierend auf dem Aktivierungs- oder Deaktivierungszustand des Modus der unsicheren Fahrsituation anzuzeigen, basierend auf zuvor bestimmten Parametern.

12. Fahrzeug mit einem Fahrsystem für immersives Erlebnis, das eine virtuelle grafische Anzeigeumgebung erzeugt, **dadurch gekennzeichnet, dass** das Fahrzeug (100) mindestens ein System zum Erzeugen einer virtuellen grafischen Anzeigeumgebung (10,10') zum Fahren nach Anspruch 11 umfasst.

13. Computerprogramm, **dadurch gekennzeichnet, dass** es das Verfahren nach einem der Ansprüche 1 bis 10 ausführt.

## Revendications

1. Procédé mis en œuvre par ordinateur permettant de générer un environnement d'affichage graphique dans un dispositif de vision à réalité virtuelle, dans lequel l'environnement d'affichage graphique (10, 10') correspond à un environnement virtuel et est utilisé comme expérience immersive pour conduire un véhicule réel (100) sur la base dudit environnement d'affichage graphique (10, 10') de cette expérience immersive, ledit environnement d'affichage graphique (10, 10') étant utilisé comme support et référence visuelle pour conduire le véhicule réel dans un environnement réel, le procédé comprenant :
- une étape consistant à produire des images virtuelles de l'environnement virtuel par une unité de calcul (12), et
- une étape consistant à composer et agencer ces images virtuelles pour un affichage sur le dispositif de vision à réalité virtuelle (11) comme environnement d'affichage graphique (10,10'), en correspondance avec au moins une position et une orientation au fil du temps du véhicule effectif (100),
**caractérisé en ce que** le procédé comprend en outre :
- une étape consistant à capturer des images de l'environnement réel prises au moyen d'un moyen d'acquisition d'images (20) compris dans ledit dispositif de vision à réalité virtuelle (11), faisant partie de celui-ci, ou par un élément couplé sans mouvement par rapport à celui-ci, ledit moyen d'acquisition d'images (20) étant configuré pour acquérir des images de l'environnement réel selon le même champ de vision que celui visible à travers ledit dispositif de vision à réalité virtuelle (11),
- une étape consistant à modifier la configuration de l'environnement d'affichage graphique (10,10') correspondant à un mode de situation de conduite dangereuse du véhicule effectif (100) dans l'environnement virtuel, ce mode de situation de conduite dangereuse est activé et désactivé par des paramètres prédéterminés, dans lequel cette étape consistant à modifier la configuration de l'environnement d'affichage graphique (10,10') comprend au moins les sous-étapes suivantes :
- le fait de terminer l'agencement des images virtuelles dans le dispositif de vision à réalité virtuelle (11), et
- l'agencement des images acquises de l'environnement réel pour un affichage en temps réel sur le dispositif de vision à réalité virtuelle (11) comme environnement d'affichage graphique (10') ; le procédé **caractérisé en ce qu'**il comprend en outre une étape consistant à générer des éléments de sécurité graphiques sous la forme de barrières virtuelles (21) virtuellement situées au niveau de limites virtuelles définissant la fin de zones virtuellement prédéterminées comme étant praticables (50), dans lequel l'étape consistant à composer et agencer les images virtuelles pour un affichage sur le dispositif de vision à réalité virtuelle (11) comme environnement d'affichage graphique (10) comporte la combinaison des images relatives audit environnement virtuel avec les éléments de sécurité graphiques sous la forme de barrières virtuelles (21), et dans lequel lesdites barrières virtuelles (21) ne sont affichées dans l'environnement d'affichage graphique (10) que lorsque la distance du véhicule effectif (100) par rapport au point virtuel au niveau duquel lesdites barrières virtuelles (21) sont situées est inférieure à une première distance prédéterminée et configurable.

2. Procédé mis en œuvre par ordinateur, selon la revendication 1, dans lequel l'activation de modification de la configuration de l'environnement d'affichage graphique (10,10') vers un mode de situation de conduite dangereuse du véhicule réel (100) dans l'environnement virtuel est déterminée au moins par le fait de détecter que le véhicule réel (100) a franchi des limites virtuelles définissant la fin de zones virtuellement prédéterminées comme praticables (50).

3. Procédé mis en œuvre par ordinateur, selon la revendication 2, dans lequel, une fois qu'il a été déterminé que le véhicule effectif (100) a franchi les limites virtuelles définissant la fin des zones virtuellement prédéterminées comme praticables (50) et que, par conséquent, la modification de configuration de l'environnement d'affichage graphique (10,10') vers un mode de situation de conduite dangereuse a été déclenché, le procédé comporte également une étape correspondant à la génération d'éléments de guidage graphique sous la forme d'éléments de guidage graphique directionnel (22) et une étape consistant à composer lesdites images d'environnement réel acquises pour un agencement en temps réel dans le dispositif de vision à réalité virtuelle (11), lesdits éléments de guidage graphique (22) étant superposés sur lesdites images d'environnement réel acquises, dans lequel lesdits éléments de guidage graphique (22) sont configurés et agencés pour signaler et guider vers l'emplacement des zones virtuellement prédéterminées comme praticables (50) dans l'environnement virtuel de sorte que l'utilisateur peut revenir vers celles-ci.

4. Procédé mis en œuvre par ordinateur, selon la revendication 3, dans lequel les éléments de guidage graphique directionnel (22) sont superposés sur lesdites images de l'environnement réel acquises dans une position statique devant le véhicule représenté dans le dispositif de vision à réalité virtuelle (11).

5. Procédé mis en œuvre par ordinateur selon l'une quelconque des revendications 1 ou 2, dans lequel l'activation de la modification de la configuration de l'environnement d'affichage graphique (10,10') vers un mode de situation de conduite dangereuse du véhicule réel (100) dans l'environnement virtuel est déterminée au moins par le fait de détecter que le dispositif de vision à réalité virtuelle (11) a perdu la connexion avec une unité de commande (P1,P2) qui obtient au moins les données associées à une position et à une vitesse du véhicule réel, avec l'unité de calcul (12) et/ou avec un quelconque système externe à ce dispositif de vision qui est en charge de fournir des données de base telles que des images virtuelles et/ou des données de position et d'orientation du véhicule réel (100) et du dispositif de vision à réalité virtuelle (11) ou qu'une perte de communication, entre ces dispositifs eux-mêmes, critique pour une conduite sûre dans cette expérience immersive est détectée.

6. Procédé mis en œuvre par ordinateur selon l'une quelconque des revendications précédentes, dans lequel le procédé comprend en outre une étape consistant à limiter le comportement dynamique du véhicule réel (100) pendant que le procédé exécute l'étape consistant à agencer les images acquises de l'environnement réel pour un affichage en temps réel sur le dispositif de vision à réalité virtuelle (11) comme environnement d'affichage graphique (10') lors d'une activation de modification de la configuration de l'environnement d'affichage graphique vers un mode de situation de conduite dangereuse du véhicule réel (100) dans l'environnement virtuel.

7. Procédé mis en œuvre par ordinateur selon l'une quelconque des revendications précédentes, dans lequel, au cours de l'étape de modification de réglages d'environnement d'affichage graphique (10,10'), le passage à un mode de situation de conduite dangereuse du véhicule réel (100) dans l'environnement virtuel est désactivé lorsque cette étape de modification de réglages d'environnement d'affichage graphique (10,10') n'est pas dans les paramètres d'activation, dans lequel cette étape comprend au moins les sous-étapes suivantes :
- le fait de terminer l'agencement en temps réel des images acquises à partir de l'environnement réel par le moyen d'acquisition d'images (20), et
- l'agencement des images virtuelles de retour dans le dispositif de vision à réalité virtuelle (11) pour un affichage dans le dispositif de vision à réalité virtuelle (11) comme environnement d'affichage graphique (10).

8. Procédé mis en œuvre par ordinateur selon la revendication 1, dans lequel, pendant le tronçon parcouru par le véhicule réel (100) déterminé à partir du point virtuel correspondant à la première distance aux barrières virtuelles (21), la configuration visuelle dans laquelle ces éléments graphiques sont affichés comme barrières virtuelles (21) est celle d'une barrière virtuelle (21) initialement transparente ou translucide, et, à mesure que le véhicule réel (100) s'approche du point virtuel où lesdites barrières virtuelles sont situées comme limite de la zone praticable (50), l'intensité de la visualisation ou l'opacité de l'élément graphique augmente jusqu'à devenir totalement opaque au niveau d'une seconde distance du point virtuel où lesdites barrières virtuelles (21) sont situées, cette seconde distance étant également prédéterminée et configurable et inférieure à la première par rapport à la barrière virtuelle (21).

9. Procédé mis en œuvre par ordinateur selon la revendication 8, dans lequel l'intensité visuelle avec laquelle les barrières virtuelles (21) s'affichent augmente de manière inversement proportionnelle à la distance restante du véhicule par rapport au point virtuel correspondant à la première distance par rapport aux barrières virtuelles (21) jusqu'à devenir totalement opaques au niveau d'une seconde distance du point virtuel où lesdites barrières virtuelles (21) sont situées.

10. Procédé mis en œuvre par ordinateur selon l'une quelconque des revendications précédentes, dans lequel le dispositif de vision à réalité virtuelle (11) reçoit des images en provenance d'un ordinateur central ou d'une unité de calcul (12) externe audit dispositif de vision à réalité virtuelle (11), ledit dispositif de vision à réalité virtuelle (11) ayant sa propre unité de traitement pour être en mesure de réaliser la composition d'images créant l'environnement d'affichage graphique (10, 10').

11. Système permettant de générer un environnement d'affichage graphique dans un dispositif de vision à réalité virtuelle pour une expérience immersive de conduite d'un véhicule réel (100) basée sur ledit environnement d'affichage graphique (10, 10') de cette expérience immersive, ledit environnement d'affichage graphique (10, 10') étant utilisé comme support et référence visuelle pour conduire le véhicule réel dans un environnement réel, **caractérisé en ce que** le système (80) est configuré pour réaliser les étapes de procédé selon les revendications 1 à 10, dans lequel le système (80) comprend au moins un dispositif de vision à réalité virtuelle (11), une unité de commande (P1,P2) qui collecte au moins des données de positionnement et d'orientation d'un véhicule, ainsi qu'une unité de calcul (12) qui génère les images de l'environnement virtuel et les envoie au dispositif de vision à réalité virtuelle (11), dans lequel ledit dispositif de vision à réalité virtuelle (11) est pourvu d'un moyen d'acquisition d'images (20) compris dans ledit dispositif de vision à réalité virtuelle (11), faisant partie de celui-ci, ou par un élément couplé sans mouvement par rapport à celui-ci, afin d'afficher des images de l'environnement virtuel fournies par l'unité de calcul (12) et/ou les images de l'environnement réel prises par ledit moyen d'acquisition d'images (20), sur la base de l'état d'activation ou désactivation du mode de situation de conduite dangereuse sur la base de paramètres prédéterminés.

12. Véhicule doté d'un système de conduite à expérience immersive qui génère un environnement d'affichage graphique virtuel, **caractérisé en ce que** le véhicule (100) comprend au moins un système permettant de générer un environnement d'affichage graphique virtuel (10, 10') pour une conduite selon la revendication 11.

13. Programme informatique **caractérisé en ce qu'**il exécute le procédé selon l'une quelconque des revendications 1 à 10.
